## Europäisches Patentamt
## European Patent Office
## Office européen des brevets

(19)

(11) Veröffentlichungsnummer : **0 380 739 B1**

(12)

# EUROPÄISCHE PATENTSCHRIFT

(45) Veröffentlichungstag der Patentschrift :
**02.09.92 Patentblatt 92/36**

(51) Int. Cl.$^5$ : **B23Q 3/08**

(21) Anmeldenummer : **89111835.8**

(22) Anmeldetag : **29.06.89**

(54) Verfahren sowie Spannvorrichtung zum zeitweiligen Festlegen von Werkstücken.

(30) Priorität : **02.02.89 DE 3903095**

(43) Veröffentlichungstag der Anmeldung :
**08.08.90 Patentblatt 90/32**

(45) Bekanntmachung des Hinweises auf die
Patenterteilung :
**02.09.92 Patentblatt 92/36**

(84) Benannte Vertragsstaaten :
**AT BE CH DE FR GB IT LI LU NL SE**

(56) Entgegenhaltungen :
**DE-A- 3 031 513**
**DE-B- 2 654 858**
**DE-C- 1 140 044**
**FR-A- 2 348 787**

(73) Patentinhaber : **HANS KALTENBACH**
**MASCHINENFABRIK GMBH & CO.**
**Gewerbestrasse 18**
**W-7850 Lörrach (DE)**

(72) Erfinder : **Lorenz, Rainer, Dipl.-Ing. (FH)**
**Bergstrasse 20**
**W-7850 Lörrach 1 (DE)**
Erfinder : **Schröder, Norbert**
**Schwarzwaldstrasse 20**
**W-7860 Schopfheim (DE)**

(74) Vertreter : **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 380 739 B1

Jouve, 18, rue Saint-Denis, 75001 PARIS

## Beschreibung

Die Erfindung betrifft ein Verfahren zum zeitweiligen Festlegen von Werkstücken, insbesondere von Hohlprofilen, bei Werkzeugmaschinen mit Hilfe einer Spannvorrichtung, deren Spannelement durch den Kolben und die Kolbenstange eines hydraulischen Arbeitszylinders in Vorschub- und Rückstellrichtung bewegt wird, wobei beim Vorschub des Spannelementes Hydrauliköl auf der die Kolbenstange aufweisenden Seite verdrängt wird und abfließt.

Die Erfindung betrifft auch eine Spannvorrichtung insbesondere zur Durchführung des Verfahrens mit einem Spannelement, welches von dem Kolben und der Kolbenstange eines hydraulischen Arbeitszylinders bewegbar ist, wobei beim Vorschub des Spannelementes und Einströmen des Druckmittels auf die der Kolbenstange abgewandte Seite und bei dessen axialer Verstellung Hydrauliköl auf der die Kolbenstange aufweisenden Seite verdrängt wird.

Spannvorrichtungen der eingangs beschriebenen Art werden beispielsweise bei Sägemaschinen eingesetzt, bei denen das zu verarbeitende Werkstück etwa während des Trenn- oder Sägevorganges sicher und fest gehalten werden muß. Dabei Können beispielsweise Werkstücke aus vollem Material und einer stabilen Profilform ohne weiteres auch mit vergleichsweise hohen Spannkräften eingespannt werden. Werkstücke aus elastischem sowie nachgiebigem Material oder mit labilen Profilformen können dagegen nur mit einem begrenzten Spanndruck belastet werden, wenn das Werkstück seine äußere Form nicht völlig verlieren und nicht flachgedrückt werden soll. Gestattet die Werkzeugmaschine etwa auch die Verarbeitung unterschiedlicher Werkstoffarten oder Profilformen, so ist daher der beim Spannen auf das jeweilige Werkstück jeweils ausgeübte Spanndruck entsprechend dessen Elastizität und Labilität auszurichten.

Zur Spanndruckreduzierung wird bislang beispielsweise der Druck des Hydrauliköles im Kolbenraum geregelt oder im Kolbenstangenraum des Spannzylinders mit Mitteln begrenzt, wie sie in Übungsheft für den Auszubildenden", Bundesamt für Berufsbildung, ISDN Nr. 3/410-38287-9, Beuth-Verlag, Berlin, Seite 105 und 106 angegeben sind. Und Grundlage für den Oberbegriff der Ansprüche sind. Bei der Druckregelung im Kolbenraum erfolgt jedoch häufig ein Nachdrücken des Zylinders, wenn das Werkstück durchgesägt ist. Auch bewegt sich die Kolbenstange im Bereich der minimalen Spannkraft langsamer als bei voller Druckbeaufschlagung. Zudem stellt ein bei der Druckregelung im Kolbenraum verwendetes Druckreduzierventil ein empfindliches Steuerelement dar, welches der Gefahr der Verschmutzung und Beschädigung besonders ausgesetzt ist.

Auch die Druckbegrenzung im Stangenraum ist häufig mit ähnlichen Nachteilen verbunden. So erfolgt auch hier meist ein Nachdrücken des Zylinders, wenn das Werkstück durchgesägt ist. Im Bereich der minimalen Spannkraft bewegt sich die Kolbenstange extrem langsam. Die Mindestspannkraft ist bei der Druckbegrenzung im Stangenraum, bedingt durch deren Funktionsprinzip, relativ hoch. Außerdem weist eine solche Druckbegrenzung meist eine schlechte Wiederholgenauigkeit auf.

Systeme, die mechanisch oder hydraulisch auf einen Anschlag fahren, haben häufig den Nachteil, daß sie bei einer Änderung der Werkstückabmessung keine Korrekturmöglichkeit besitzen.

Systeme dagegen, bei denen der Spanndruck durch Proportional- oder Servoventile gesteuert oder geregelt wird, sind oft vergleichsweise teuer und aufwendig und zum Teil auch schmutzanfällig.

Es besteht daher die Aufgabe, ein Verfahren der eingangs erwähnten Art zum zeitweiligen Festlegen von Werkstücken zu schaffen, mit dessen Hilfe auch Werkstücke aus elastischen Werkstoffen oder mit labilen Profilformen schnell, sicher und fest eingespannt werden können, ohne daß durch den Spanndruck des hydraulischen Arbeitszylinders das Werkstück übermäßig flachgedrückt wird.

Es besteht aber auch die Aufgabe, eine Spannvorrichtung nach dem Oberbegriff von Anspruch 3 zu schaffen, die das ausreichend feste Einspannen eines zu bearbeitenden Werkstükkes erlaubt, ohne daß dieses während des Spannvorganges ungewollt und übermäßig verformt würde.

Die erfindungsgemäße Lösung erfolgt bei dem Verfahren der eingangs erwähnten Art mit den Verfahrensschritten gemäß dem kennzeichnenden Teil des Patentanspruches 1.

Nach dem erfindungsgemäßen Verfahren wird der Abfluß des beim Vorschub verdrängten Hydrauliköls, welches bis dahin auf der die Kolbenstange aufweisenden Seite des Zylinders verblieben ist, also weitestgehend gesperrt und unterbunden. Lediglich eine geringe Teilmenge des dort verbliebenen Hydrauliköls wird auch nach dem Auftreffen des Spannelementes auf dem Werkstück durch den noch geringfügig sich in Vorschubrichtung bewegenden Kolben verdrängt, bis der sich aufbauende Gegendruck die Vorschubbewegung des Spannelementes stoppt. Durch eine entsprechende Dosierung der auch nach dem Auftreffen auf das Werkstück noch verdrängten Teilmenge läßt sich der beim Spannen auf das Werkstück ausgeübte Spanndruck so bemessen, daß das Werkstück nicht flachgedrückt wird. Zweckmäßigerweise wird diese Teilmenge so gewählt, daß der bei der Vorschubbewegung des Spannelementes ausgeübte Spanndruck nicht den elastischen Bereich des Werkstückes überschreitet und es nicht zu bleibenden Deformationen kommt.

Die Vorschubbewegung des Spannelementes wird also gestoppt, wenn beispielsweise der gegen den Wi-

derstand und auch von der Widerstandskraft des Materials gegen Verformung entwickelte Gegendruck einerseits und der maximale Spanndruck andererseits im Gleichgewicht stehen. In diesem Fall erfolgt praktisch eine selbsttätige Angleichung der beim Spannen verwendeten Spannkraft an das jeweilige Profil und Vollmaterial. Auf diese Weise können beispielsweise auch vergleichsweise labile Hohlprofile mit einem ausreichenden Spanndruck schnell, sicher und fest eingespannt werden.

Zwar ist aus DE-C-1 140 044 eine Vorrichtung zum unterschiedlichen hydraulischen Spannen von Werkstücken insbesondere für Drehbänke bekannt, mit der nachgiebige Werkstücke, die durch eine große Spannkraft unrund werden, eingespannt werden können sollen. Dabei ist ein beidseits mit Hydrauliköl beaufschlagter Spannkolben in einem Spannzylinder vorgesehen, mit dessen Hilfe das Spannfutter nach einer ersten festeren Einspannung so gelockert werden kann, daß die zuvor größere Verformung des Werkstückes genügend zurückgeht, das Werkstück aber für eine Nachbearbeitung eingespannt bleibt. Die Spannseite des Spannzylinders ist dazu mit einem Zusatzraum, z.B. einem Hilfszylinder, verbindbar und die Löseseite des Spannzylinders ist mit Hochdrucköl beaufschlagbar. Zusätzlich ist ein hydraulisches System mit einer Anordnung von Ventilen und Schiebern erforderlich, durch die nacheinander die Spannseite von der Hochdruckzuleitung trennbar und mit dem Hilfszylinder verbindbar, anschließend die Löseseite des Spannzylinders mit Hochdrucköl beaufschlagbar und schließlich die spannseite des Spannzylinders mit Niederdrucköl beaufschlagbar und die Löseseite des Spannzylinders mit einem Ablauf verbindbar ist.

Entsprechend der Zielrichtung, ein Werkstück zunächst fester einzuspannen und anschließend die Spannbacken lockern zu können, ist also eine andersartige Vorgehensweise und Vorrichtung als die gem. der Erfindung erforderlich.

Der beim Spannen verwendete Spanndruck kann jedoch auch willkürlich so eingeregelt werden, daß ein unbeabsichtigtes und übermäßiges Verformen des Werkstückes weitgehend verhindert wird, und zwar indem die nach dem Auftreffen des Spannelementes auf das Werkstück noch verdrängte Teilmenge des Hydrauliköls entsprechend der jeweiligen Elastizität oder Nachgiebigkeit der einzuspannenden Werkstücke verändert wird.

Bei der Spannvorrichtung der eingangs erwähnten Art besteht die erfindungsgemäße Lösung insbesondere darin, daß der Kolben als relativ zur Kolbenstange um einen begrenzten Weg verstellbarer Schiebekolben ausgebildet ist, daß an der Kolbenstange zumindest eine Rückführöffnung für das beim Vorschub zu verdrängende Hydrauliköl vorgesehen ist und der Schiebekolben bei einer Relativverstellung in axialer Richtung diese Rückführöffnung verschließt, und daß der auf der Seite der Kolbenstange befindliche Zylinderraum einen mit ihm verbundenen Nebenraum hat oder damit verbunden ist.

Durch den beim Vorschub wirksamen Betriebsdruck im Arbeitszylinder wird das Spannelement zunächst in seine Spannstellung bewegt. Dabei fließt das auf der die Kolbenstange aufweisenden Seite des Kolbens befindliche Hydrauliköl aus diesem Bereich durch die Rückführöffnung nach außen. Trifft die Kolbenstange auf dem Werkstück auf, so wird die Kolbenstange in ihrer Vorschubbewegung zunächst gebremst. Der auf den Schiebekolben weiterhin wirksame Betriebsdruck im Arbeitszylinder bewegt den Schiebekolben über die an der Kolbenstange vorgesehene Rückführöffnung, so daß der Hauptabfluß des beim Vorschub verdrängten Hydrauliköls gesperrt wird. Das auf der die Kolbenstange aufweisenden Seite noch verbliebene Hydrauliköl kann nun von dem sich

beispielsweise im Bereich der Elastizität des Werkstückes in Vorschubrichtung bewegenden Kolben nur noch in den Nebenraum verdrängt werden und nach dorthin abfließen. Ist auch der Nebenraum nicht mehr mit weiterem Hydrauliköl füllbar, so stoppt der dabei entstehende Gegendruck endgültig die Vorschubbewegung des Spannelementes. In dieser Lage hält das Spannelemente das Werkstück sicher und fest, ohne daß dieses übermäßig oder gar vollständig flachgedrückt würde.

Dabei ist es vorteilhaft, wenn der mit dem Zylinderraum verbundene Nebenraum bezüglich seines Volumens veränderbar ist, um den Spanndruck an die Verformbarkeit und Labilität eines Werkstückes anpassen zu können.

Dazu sieht eine einfache und vorteilhafte Ausführungsform gemäß der Erfindung vor, daß der Nebenraum einen von einer Rückstellkraft beaufschlagten oder beaufschlagbaren Kolben enthält und die Rückstellkraft vorzugsweise eine Feder, insbesondere Druckfeder, oder ein Kolben ist.

Nach einem weiteren vorteilhaften Vorschlag gemäß der Erfindung ist der Verschiebeweg des in dem Nebenraum befindlichen Kolbens durch einen in Verschieberichtung des Kolbens verstellbaren und festlegbaren Anschlag begrenzt. Durch einen solchen verstellbaren und festlegbaren Anschlag kann das in dem Nebenraum zur Verfügung stehende Volumen verändert und beispielsweise an die Verformbarkeit und Labilität des jeweiligen Werkstückes auf einfache Weise angepaßt werden.

Zweckmäßigerweise ist dabei der verstellbare Anschlag als in Richtung des Kolbenweges orientierte Schraube oder Spindel ausgebildet.

Eine einfache und vorteilhafte Weiterbildung gemäß der Erfindung sieht vor, daß die zum Rückstellen des im Nebenraum befindlichen Kolbens dienende Feder in ihrer Lage in Verschieberichtung des Kolbens veränderbar ist und sich dazu vorzugsweise auf einer in Verschieberichtung des Kolbens verstellbaren und festlegbaren Gegenplatte abstützt. Auf diese Weise läßt sich eine selbsttätige Angleichung der auf das Werkstück ausgeübten Spannkraft etwa an das jeweilige Profil sowie die Materialart oder -stärke erreichen. Dabei wird bei einem Kräftegleichgewicht zwischen der Federkraft und der Widerstandskraft des Materials gegen Verformung einerseits und der maximalen Spannkraft andererseits die Vorschubbewegung des Spannelementes gestoppt. Durch die Einstellbarkeit der Feder ergeben sich verschiedene Einstellbereiche, die beispielsweise nur für eine andere Werkstoffart oder/und für eine grundlegend andere Profilform gewechselt werden müssen. Dabei spielt die Wandstärke des Profils nur eine untergeordnete Rolle, d.h., ein einmal eingestellter Einstellbereich deckt dünn- und dickwandige Profile bis hin zum Vollmaterial ab.

Zweckmäßigerweise ist die Gegenplatte über eine Spindel, eine Schraube od.dgl. Verstellelement verstellbar.

Möglich ist aber auch, daß ein Teilstrom der beim Vorschub des Spannelementes durch die Rückflußöffnung verdrängten Hydrauliköls zum Rückstellen des im Nebenraum befindlichen Kolbens dient. Bei dieser Ausführungsform ist eine Feder als Rückstellkraft zum Rückstellen des im Nebenraum befindlichen Kolbens nicht notwendig.

Nachstehend wird die Erfindung anhand vorteilhafter Ausführungsbeispiele in Verbindung mit den Figuren noch näher erläutert.

Es zeigt:

Fig. 1 den Arbeitszylinder einer Spannvorrichtung zum zeitweiligen Festlegen eines Werkstückes in einem Teil-Längsschnitt im Bereich des Verschiebeweges seines Kolbens,

Fig. 2 das Blockschema einer Spannvorrichtung, ähnlich der aus Fig.1,

Fig. 3 den als Verdrängerzylinder ausgebildeten Nebenraum der Spannvorrichtung aus Fig.1 und 2 in einem Längsschnitt,

Fig. 4 die teilweise schematisch dargestellte Spannvorrichtung in einem längsgeschnittenen Teilausschnitt im Bereich ihres Arbeitszylinders sowie des Nebenraumes in Ausgangsstellung zu Beginn des Spannvorganges von einem aus Vollmaterial bestehenden Werkstück,

Fig. 5 die Spannvorrichtung aus Fig.4 beim Auftreffen oder Aufsetzen der Kolbenstange auf das Werkstück,

Fig. 6 die Spannvorrichtung aus Fig.4 und 5 beim Schließvorgang ihres Schiebekolbens, bei dem dieser die Rückführöffnung für das beim Vorschub verdrängte Hydrauliköl schließt,

Fig. 7 eine Spannvorrichtung, ähnlich der aus Fig.4 bis 6, in einem längsgeschnittenen und zum Teil schematisch dargestellten Teil-Ausschnitt im Bereich ihres Arbeitszylinders sowie des Nebenraumes in Ausgangsstellung vor dem Einspannen eines hier runden Hohlprofiles,

Fig. 8 die Spannvorrichtung aus Fig.7 beim Auftreffen oder Aufsetzen ihrer Kolbenstange auf das Hohlprofil,

Fig. 9 die Spannvorrichtung aus Fig.7 und 8 beim Schließvorgang ihres Kolbens,

Fig. 10 die Spannvorrichtung aus Fig.7 bis 9 mit einer in den Nebenraum verdrängten Teilmenge der Hydraulikflüssigkeit bei eingespanntem Hohlprofil und

Fig.11 das Blockschema einer gegenüber Fig.2 leicht abgeänderten Spannvorrichtung, bei der ein Teilstrom des beim Vorschub des Kolbens verdrängten Hydrauliköls zum Rückstellen des im Nebenraum befindlichen Verdrängerkolbens dient.

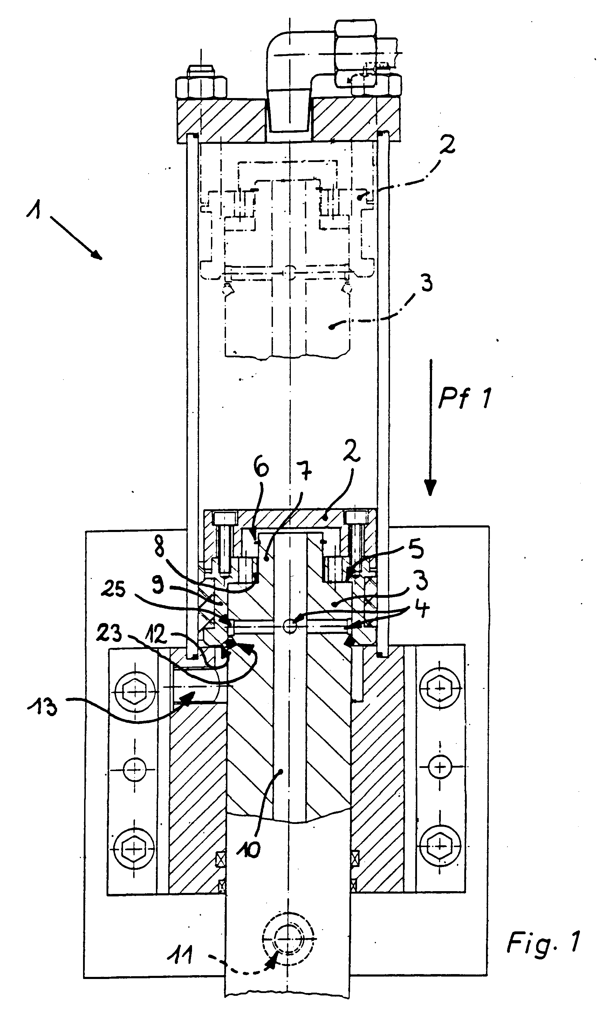

Fig.1 zeigt in einem Teil-Längsschnitt den hydraulischen Arbeitszylinder 1 einer Spannvorrichtung zum zeitweiligen Festlegen und Fixieren von Werkstücken im Bereich des Verschiebeweges seines Kolbens 2. Die in Fig.1 im übrigen nicht weiter dargestellte Spannvorrichtung kann vorteilhaft beispielsweise bei einer Sägemaschine eingesetzt werden, um dort Werkstücke jeweils unterschiedlicher Elastizität und insbesondere auch Hohlprofile während des Sägeund Trennvorganges sicher und fest in ihrer Lage zu halten, und zwar ohne daß das in seiner Form eventuell auch nachgiebige Werkstück beim Spannen übermäßig oder gar vollständig flachgedrückt wird.

Das - hier nicht dargestellte - Spannelement dieser Spannvorrichtung, mit dem das Werkstück eingespannt wird, wird von einem im Arbeitszylinder 1 geführten Kolben 2 und einer, mit dem Kolben 2 verbundenen Kolbenstange 3 in Vorschubund Rückstellrichtung bewegt. Dabei verdrängt der durch den Betriebsdruck beaufschlagte und in Vorschubrichtung Pf 1 gedrückte Kolben 2 auf der die Kolbenstange 3 aufweisenden Seite des Kolbens 2 Hydrauliköl durch Rückführöffnungen 4, die in einer gemeinsamen, äußeren Radialnut 25 der Kolbenstange 3 enden.

Wie Fig.1 zeigt, ist der Kolben 2 erfindungsgemäß als ein relativ zur Kolbenstange 3 um einen begrenzten Weg verstellbarer Schiebekolben ausgebildet. Dabei wird der Verschiebeweg des Schiebekolbens 2 relativ zur Kolbenstange 3 einerseits durch eine am kolbenseitigen Endbereich der Kolbenstange 3 vorgesehene Anschlagfläche 5 oder einen Anschlagbund und andererseits durch einen an der Kolbenstange 3 in Axialrichtung praktisch unverrückbar befestigten Sicherungsring 6 begrenzt. Ein am kolbenseitigen Endbereich der Kolbenstange 3 vorgesehener Stangen-Fortsatz 7 kleineren Durchmessers dient einem inneren und Durchtrittsöffnungen für das Hydrauliköl aufweisenden Ringflansch 8 des Kolbens 2 als Führung zwischen der Absatz- oder Anschlagfläche und dem Sicherungsring 6. Dabei greift der Sicherungsring 6 in eine Sicherungsnut am Stangen-Fortsatz 7 ein. Der im wesentlichen etwa topfförmig ausgebildete Schiebekolben 2 umgreift mit seiner Umfangswand 9 den kolbenseitigen Endbereich der Kolbenstange 3.

Aus Fig.1 ist gut erkennbar, daß diese Kolbenstange 3 als eine zum Kolben 2 hin durchgehende Hohlstange ausgebildet ist. Am kolbenseitigen Endbereich der Kolbenstange 3 sind mehrere radiale Rückführöffnungen 4 für das Hydrauliköl vorgesehen, die die Innenhöhlung 10 der Kolbenstange 3 mit dem kolbenstangenseitigen Bereich des Arbeitszylinders verbinden. Bei geöffneten Rückführöffnungen kann das von dem sich in Vorschubrichtung bewegenden Schiebekolben 2 verdrängte Hydrauliköl durch die Innenhöhlung 10 über eine außerhalb des Zylinders an der Kolbenstange 3 vorgesehene Abflußöffnung 11 aus dem kolbenstangenseitigen Bereich nach außen abfließen.

In einer Relativstellung zur Kolbenstange 3 verschließt der Schiebekolben 2 diese Rückführöffnungen 4 und sperrt somit den Hauptabfluß des Hydrauliköls. Dazu ist an der Kolben stange 3 auf der dem Kolben 2 abgewandten Seite der Rückführöffnungen 4 ein über den Umfang der Kolbenstange 3 ragender O-Ring 23 vorgesehen, gegen den sich der Schiebekolben 2 mit einer Fase 12 an der Innenseite seiner Umfangswand 9 bewegen kann. Trifft der Schiebekolben 2 in einer Endstellung auf die zwischen der Kolbenstange 3 und dem Stangen-Fortsatz gebildete Absatz- oder Anschlagfläche 5 auf, dichtet er somit gleichzeitig die Rückführöffnungen 4 ab.

Sind die Rückführöffnungen 4 und damit auch der Hauptabfluß verschlossen, so kann das auf der die Kolbenstange 3 aufweisenden Seite im Arbeitszylinder 1 noch verbliebene Hydrauliköl lediglich über den Nebenabfluß 13 in einen als Verdrängerzylinder 14 mit Verdrängerkolben 15 ausgebildeten Nebenraum abfließen und verdrängt werden, wenn beispielsweise ein unter dem Betriebs- oder Spanndruck nachgiebiges Werkstück auch nach dem Auftreffen der Kolbenstange 3 noch eine Verschiebebewegung der Kolbenstange 3 in Vorschubrichtung Pf 1 zuläßt.

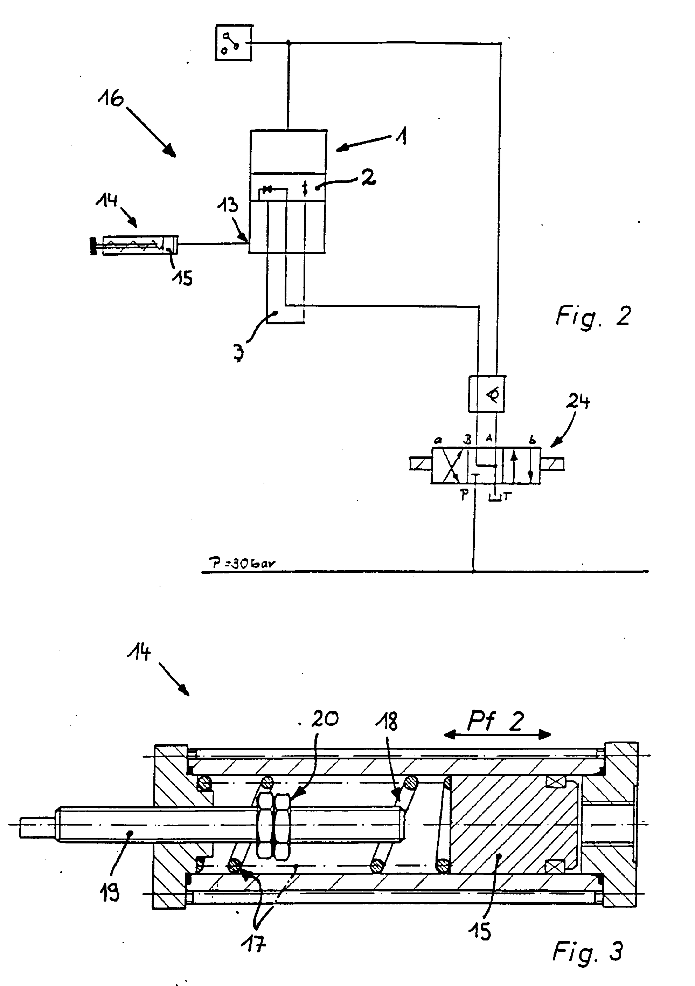

In dem Blockschema aus Fig.2 ist der Aufbau einer erfindungsgemäßen Spannvorrichtung 16 schematisch dargestellt. Deutlich zu erkennen ist der Arbeitszylinder sowie der darin geführte Kolben 2 und die Kolbenstange 3 dieser hier in Ruhestellung befindlichen Spannvorrichtung 16. Über ein 3-Wege-Ventil 24 kann das mit der Kolbenstange 3 verbundene und hier nicht dargestellte Spannelement in Vorschub- oder Rückstellrichtung bewegt werden.

Aus Fig.2 ist auch gut erkennbar, daß die die Kolbenstange 3 aufweisende Seite des Kolbens 2 bzw. der betreffende Bereich über einen Nebenabfluß 13 mit dem Nebenraum verbunden ist.

Dieser Nebenraum ist in einem Längsschnitt in Fig. 3 noch näher dargestellt. Aus Fig. 3 wird deutlich, daß der Nebenraum als Verdrängerzylinder 14 ausgebildet ist, in dem ein zum Nebenabfluß 13 hin (vgl.Fig.2) mit Hydrauliköl beaufschlagbarer Verdrängerkolben 15 bewegbar geführt ist. Durch den im Verdrängerzylinder 14 bewegbar geführten Verdrängerkolben 15 ist der mit dem Zylinderraum verbundene Nebenraum bezüglich seines Volumens veränderbar. Als Rückstellkraft für den Verdrängerkolben 15 dient im Verdrängerzylinder 14 eine Druckfeder 17, die den Verdrängerkolben 15 auf der zum Nebenabfluß 13 (vgl.Fig.2) hin abgewandten Seite beaufschlagt. Der Verschiebeweg des in dem als Verdrängerzylinder 14 ausgebildeten Nebenraum befindlichen Verdrängerkolbens 15 kann durch einen in Verschieberichtung Pf 2 des Verdrängerkolbens 15 verstellbaren und festlegbaren Anschlag 18 begrenzt werden. Dieser verstellbare Anschlag 18 ist als eine in Richtung des Kolbenweges orientierte Spindel 19 ausgebildet. Auch der Anschlag 18 bzw. die Spindel 18 ist auf der zum Nebenabfluß 13 (vgl.Fig.2) hin abgewandten Seite des Verdrängerkolbens 15 angeordnet.

Durch die Spindel 19 kann das dem in den Nebenraum verdrängten Hydrauliköl dort zur Verfügung stehende Volumen begrenzt werden. Dabei verhindert eine durch eine Gegenmutter gekonterte Mutter 20 ein unbeabsichtigtes, völliges Herausdrehen der als Anschlag 18 dienenden Spindel 19.

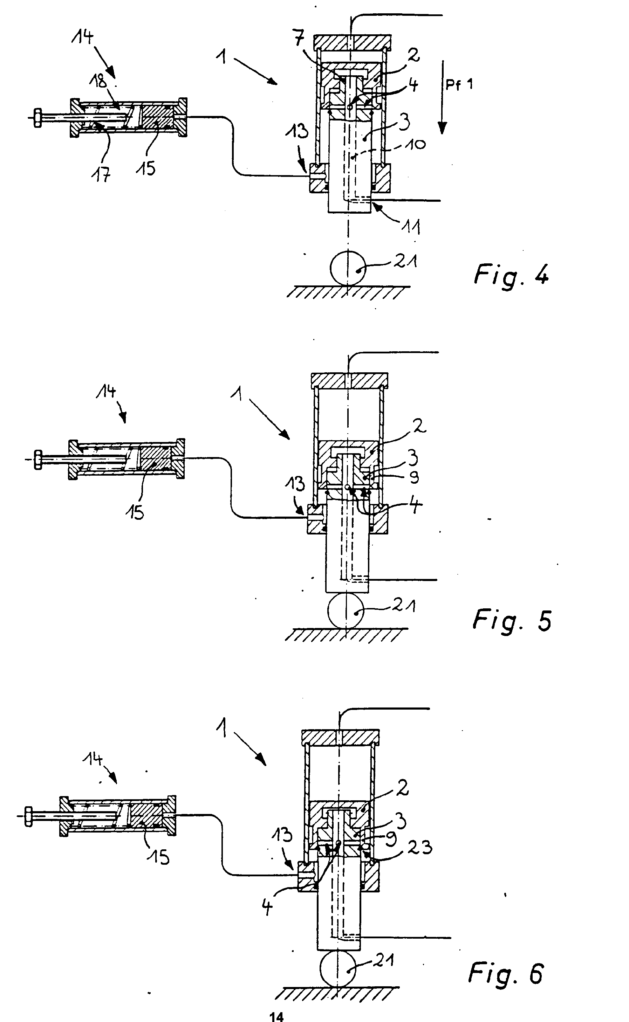

In den Figuren 4 bis 10 soll die Funktionsweise der erfindungsgemäßen Spannvorrichtung veranschaulicht werden. Dabei ist in den Längsschnitten aus Fig.4 bis 6 die Spannvorrichtung 16 beim Spannen eines aus Vollmaterial bestehenden und entsprechend auch unter Druck weitgehend unnachgiebigen Werkstückes 21 schematisch dargestellt.

Fig. 4 zeigt die Spannvorrichtung 16 zu Beginn des Spannvorganges des Werkstückes 21 in der Ausgangsstellung seines Arbeitszylinders 1 sowie des damit verbundenen Nebenraumes.

In dieser Ausgangsstellung ist die Kolbenstange 3 weitgehend in den Arbeitszylinder 1 eingefahren; der Schiebekolben befindet sich in seiner, in Fig.4 oberen Relativposition zur Kolbenstange 3. In dieser Relativposition sind die Rückführöffnungen 4 und damit der Hauptabfluß des bei der Vorschubbewegung verdrängten Hydrauliköls noch frei.

Bei Druckbeaufschlagung des Schiebekolbens 2 auf der der Kolbenstange 3 abgewandten Seite bewegt sich die Kolbenstange 3 in Vorschubrichtung Pf 1 (vgl.Fig.4) nach unten. Dabei bleibt der Abflußquerschnitt der Rückführöffnungen 4 frei, da der Druck des verdrängten Öles im kolbenstangenseitigen Bereich des Arbeitszylinders gegen die innere und äußere Fläche des Kolbens 2 und gegen die wirksame Stirnfläche der Kolbenstange 3, die Anschlagfläche 5, wirkt.

Fig. 5 zeigt den Arbeitszylinder 1 sowie den damit verbundenen Nebenraum der Spannvorrichtung 16 beim Auftreffen oder Aufsetzen seiner - hier zur Veranschaulichung ohne ein weiteres Spannelement ausgebildeten - Kolbenstange 3 auf das Werkstück 21.

Berührt das Druckstück - oder hier die Kolbenstange 3 - das Werkstück 21, kann die Kolbenstange 3 nicht weiter ausfahren. Der auf die der Kolbenstange 3 abgewandten Seite des Kolbens wirkende Betriebsdruck des beim Vorschub in diesen Bereich einströmenden Hydrauliköls drückt nun den Schiebekolben 2 gegen die Anschlagfläche 5 (vgl.Fig.6) in seine untere Relativposition zur Kolbenstange 3, in der er die an der Kolbenstange 3 vorgesehenen Rückführöffnungen 4 verschließt und den Querschnitt mit seiner Fase 12 gegen den O-Ring hydraulisch abdichtet.

Nach dem in Fig.6 dargestellten Schließvorgang des Schiebekolbens 2 kann die Kolbenstange 3 nicht weiter ausfahren, da das Vollmaterial des Werkstückes 21 praktisch nicht nachgibt. Daher wird auch kein weiteres Hydrauliköl in dem die Kolbenstange aufweisenden Bereich des Arbeitszylinders 1 verdrängt. Entsprechend bewegt sich auch in dieser Phase des Spannvorganges der im Verdrängerzylinder 14 befindliche Verdrängerkolben 15 nicht. Der Gegendruck in dem die Kolbenstange 3 aufweisenden Bereich des Arbeitszylinders 1 ist fast null, d.h., das Werkstück wird in der in Fig.6 dargestellten Spannstellung mit der ganzen Spannkraft gespannt.

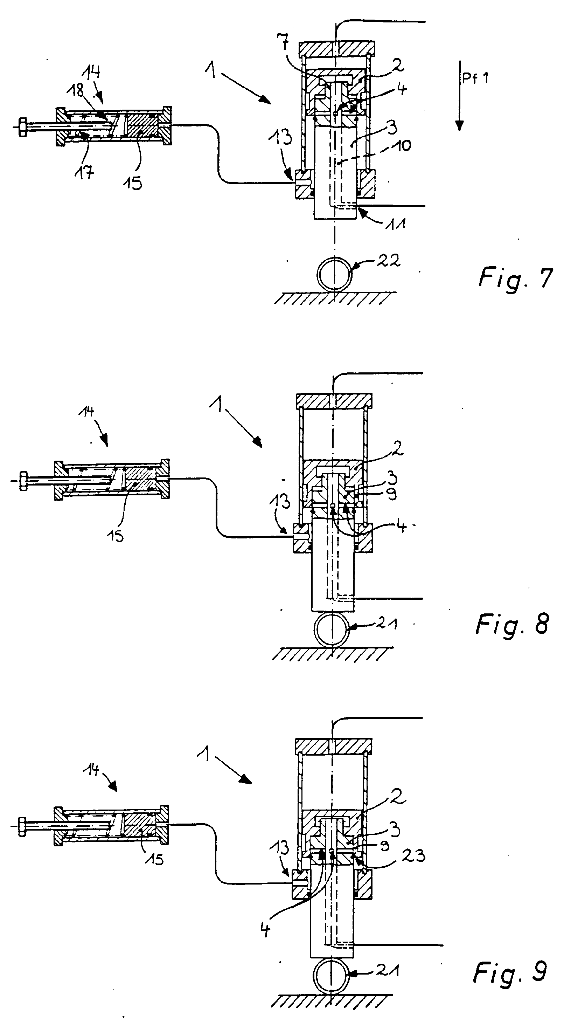

Im Gegensatz zu den Figuren 4 bis 6 ist in den Figuren 7 bis die Spannvorrichtung 16 beim Spannen eines hohlen Profilrohres und bei entsprechendem Druck in seiner Form auch nachgiebigen Werkstückes 22 gezeigt.

Dabei unterscheiden sich die in den Figuren 7 u.8 dargestellten Phasen des Spannvorganges praktisch nicht von denen in Fig. 4 und 5, da bei der Vorschubbewegung der Kolbenstange 3 in Pfeilrichtung Pf 1 (vgl.Fig.7) und bei derem unmittelbaren Aufsetzen auf das Werkstück 22 (vgl.Fig.8) dessen Elastizität und/oder Labilität noch nicht auswirken kann.

Nach dem Schließvorgang des Schiebekolbens (vgl.Fig.9) ist jedoch der Hauptabfluß des in dem die Kolbenstange aufweisenden Bereich des Arbeitszylinders 1 verbliebenen Hydrauliköls versperrt. Da das Werkstück 22 unter dem Betriebsdruck des in dem der Kolbenstange 3 abgewandten Bereich nachströmenden Hydrauliköls nachgibt, kann die Kolbenstange 3 sich auch nach dem Schließvorgang des Schiebekolbens 2 weiter in Vorschubrichtung Pf 1 bewegen. Da in dieser Phase des Spannvorganges der Hauptabfluß des in dem die Kolbenstange aufweisenden Bereich noch verbliebenen Hydrauliköls versperrt ist, kann eine Teilmenge dieses Hydrauliköls nur noch in den als Verdrängerzylinder 14 ausgebildeten Nebenraum entweichen.

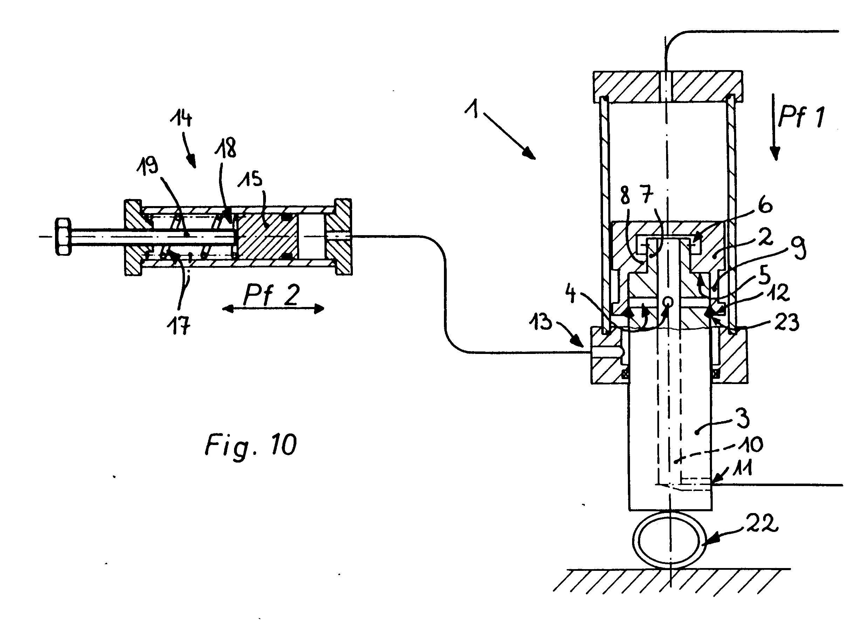

Wie Fig. 10 zeigt, schiebt die dabei verdrängte Teilmenge des Hydrauliköls beim Spannen beispielsweise eines dünnwandigen und dem Betriebsdruck zunächst keinen nennenswerten Widerstand entgegensetzenden Werkstück 22 den Verdrängerkolben 15 im Verdrängerzylinder 14 gegen die Federkraft der Druckfeder 17 an den einstellbaren Anschlag 18. Gleichzeitig fährt die Kolbenstange 3 des Arbeitszylinders 1 den Weg im entsprechenden Verhältnis der Flächen der beiden Kolben 2,15 aus und verformt das dünnwandige Profil.

Dies ist eine reine Wegbegrenzung des Spannzylinders. Die entsprechende Spannkraft hängt von der Verformbarkeit des Werkstückes ab. Zweckmäßigerweise ist darauf zu achten, daß der elastische Bereich des Werkstückes nicht überschritten wird und es nicht zu bleibenden Deformationen kommt.

Selbst wenn die Einstellung des Anschlages 18 falsch ist und dieser beispielsweise in Fig.10 zu weit nach links gedreht ist, wird das Werkstück 22 nur so weit zusammengedrückt, bis der Verdrängerkolben 15 den Anschlag 18 wieder erreicht hat. Das Werkstück hat zwar eine geringe Deformation, wird hier aber nicht vollends plattgedrückt.

Der sich aufbauende Gegendruck in dem die Kolbenstange aufweisenden Bereich des Arbeitszylinders bewirkt eine Einspannung der Kolbenstange 3, so daß diese etwa nach dem Sägen des Werkstückes 22 oder beim Herausziehen dieses Werkstückes (im gespannten Zustand) in Fig.10 nicht weiter nach unten fährt.

Beim Spannen von dickwandigen Profilen sind beide, in den Figuren 4 bis 6 bzw. 7 bis 10 beschriebenen Abläufe möglich, je nach der Verformbarkeit des Werkstückes und nach der Einstellung des Anschlages 18 im Verdrängerzylinder 14. Außerdem beeinflußt die Druckfeder 17 im Verdrängerzylinder 14 den Betrag der Werkstückverformung.

Steht der Anschlag 18 in Fig.10 weit nach rechts, wird der Verdrängerkolben 15 begrenzt und das Profil des Werkstückes relativ schwach gedrückt. Hier erfolgt eine Wegbegrenzung des Arbeitszylinders 1.

Steht bei einem dickwandigen Profil dagegen der Anschlag 18 in Fig.10 weit nach links, kann der Verdrängerkolben 15 diese Position nicht erreichen, wenn sich die Feder- und die Spannkraft auf das Werkstück im Gleichgewicht mit der auf die der Kolbenstange 3 abgewandten Seite des Kolbens 2 wirksamen Kraft befinden. Durch Verstellen des Anschlages 18 können diese Betriebszustände übergangslos eingestellt werden.

Hier nicht weiter dargestellt ist eine vorteilhafte Ausführungsform der erfindungsgemäßen Spannvorrichtung, bei der die zum Rückstellen des im Nebenraum befindlichen Verdrängerkolbens dienende Feder in ihrer Lage in Verschieberichtung des Kolbens veränderbar ist.

Bei dieser Ausführungsform ersetzt man im Verdrängerzylinder den Anschlag durch eine Einstellvorrichtung für die Feder, so daß eine selbsttätige Angleichung der Spannkraft an das jeweilige Profil und an Vollmaterial erfolgt.

Dieser Vorgang basiert auf dem Kräftegleichgewicht zwischen der Federkraft und der Widerstandskraft des Werkstück-Materials gegen Verformung einerseits und der maximalen Spannkraft andererseits. Kann auf diese Weise die Federkraft eingestellt werden, so ergeben sich daraus verschiedene Einstellbereiche, die nur für eine andere Werkstoffart und/oder für eine grundlegend andere Profilform (z.B.stabile Profilformen oder labile Profilformen) gewechselt werden müssen.

Die Wandstärke des Profils spielt dabei nur eine untergeordnete Rolle, d.h. ein Einstellbereich deckt dünn- und dickwandige Profile bis hin zum Vollmaterial ab.

So ergibt beispielsweise eine kleine Spannkraft am Werkstück und eine große Federkraft im Verdrängerzylinder einen grossen Federweg und einen großen Spannweg, wie er beispielsweise für dünnwandige Profile geeignet ist.

Bei einer mittleren Spannkraft am Werkstück und mittlerer Federkraft im Verdrängerzylinder ergibt sich beispielsweise ein mittlerer Federweg und ein mittlerer Spannweg, wie er sich für dickwandige Profile eignet.

Bei maximaler Spannkraft am Werkstück und minimaler Federkraft ist der Federweg sowie der Spannweg praktisch null; diese Aufteilung der maximalen Spannkraft eignet sich beispielsweise zum Spannen von Vollmaterial.

Zum Entspannen des Werkstückes wird die der Kolbenstange 3 zugewandte Kolbeninnenseite mit dem durch die hohle Kolbenstange 3 in den Arbeitszylinder 1 eingeleiteten Betriebsdruck beaufschlagt. Dabei bewegt sich der Schiebekolben 2 beispielsweise in Fig.10 nach oben und gibt den Abflußquerschnitt der Rückführöffnungen 4 wieder frei. Das Hydrauliköl kann somit in den die Kolbenstange 3 aufweisenden Bereich des Arbeitszylinders 1 einströmen. Dabei fährt die Kolbenstange 3 wieder in den Arbeitszylinder 1 ein. Die Druckfeder 17 im Verdrängerzylinder 14 drückt den Verdrängerkolben 15 in seine Ausgangsstellung zurück.

Die erfindungsgemäße Spannvorrichtung 16 hat durch ihr kombiniertes Kraft-Weg-Spannsystem unter anderem die folgenden Vorteile:

– Großer Spannkraftbereich von beispielsweise 2000 N bis 13000 N oder Spannwegbereich von beispielsweise 0 mm bis 2,5 mm (Verformungsweg);

– selbsttätiges Spannen von Profilen und Vollmaterial ohne Voreinstellung des Spannstocks;

– Nachregulierung von Spannkraft und/oder Spannweg während des Spannvorganges möglich;

– kein Nachdrücken des Spannzylinders, wenn das Profil durchgesägt ist;

– gegenüber Spanndruckbegrenzungen oder -regulierungen werden schnellere Öffnungs- und Schließgeschwindigkeiten des Spannstocks erreicht;

– eingestellte Werte sind temperaturunabhängig;

– wird ein in seiner Form nachgiebiges Profil aus Versehen mit voller oder höherer Kraft gespannt, so bewirkt die Wegbegrenzung nur eine geringe Deformation des Werkstükkes, d.h., ein Profil wird bei entsprechender Einstellung des Verdrängerzylinders nicht vollends plattgedrückt.

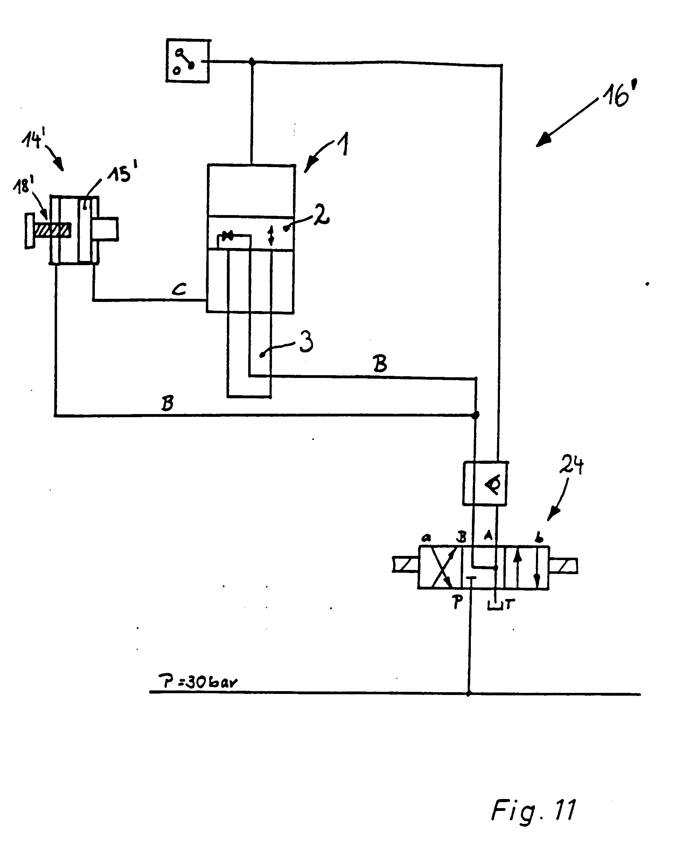

In Fig.11 ist das gegenüber Fig.2 leicht abgeänderte Blockschema einer gegenüber den Figuren 1 bis 10 leicht abgewandelten Spannvorrichtung 16′ gezeigt. Die Spannvorrichtung 16′ unterscheidet sich von der in Fig.2 dargestellten Spannvorrichtung 16 im wesentlichen dadurch, daß bei ihr im Verdrängerzylinder 14′ die Rückstellung des Verdrängerkolbens 15′ durch eine hydraulische Beaufschlagung ersetzt ist. Dabei dient ein über die Hydraulikleitung B in den Verdrängerzylinder 14′ eingeleiteter Teilstrom der beim Vorschub des Spannelementes durch die Rückflußöffnungen verdrängten Hydrauliköls zum Rückstellen des im Nebenraum befindlichen Verdrängerkolbens 15′.

Bei dieser abgewandelten Ausführungsform der Spannvorrichtung ergeben sich folgende Vorteile:

– Kein Spannkraftverlust, bedingt durch die Rückwirkung der Federkraft, wenn der Verdrängerkolben 15′ auf den Anschlag 18 gefahren ist;

– leichtere Montage des Zylinders;

– Durchmesserverhältnis von Arbeitszylinder 1 und Verdrängerzylinder 14′ kann auch gleich groß gewählt werden, da die Federkräfte der Druckfeder 17 nicht mehr berücksichtigt werden müssen.

Bei Druckbeaufschlagung der Leitung B erfolgt das Zurückstellen des Verdrängerkolbens 15′ im Verdrängerzylinder 14′. Schließt der Schiebekolben 2, so wird auch die Leitung B drucklos, so daß das in dem die Kolbenstange 3 aufweisenden Bereich verbliebene Hydrauliköl über den Nebenabfluß sowie die Leitung C in den Verdrängerzylinder 14′ einfließen kann. Dabei fährt der Verdrängerkolben 15′ ohne Gegendruck oder Gegenkraft einer Druckfeder auf den hier als Schraube ausgebildeten Anschlag 18′ auf.

Insbesondere bei einer solchen Spannvorrichtung 16', bei der ein Teilstrom des beim Vorschub verdrängten Hydrauliköls die Rückstellkraft für den Verdrängerkolben 15' bildet, ist es vorteilhaft, wenn die lichten inneren Durchmesser des Arbeitszylinders 1 und des als Verdrängerzylinder 14' ausgebildeten Nebenraumes etwa gleich groß sind. Da somit die geometrischen Maße der Abmessungen der beiden Zylinder - Arbeitszylinder 1 und Verdrängerzylinder 14' - gleich gewählt werden, kann auch die in den Nebenraum verdrängte Teilmenge der Hydraulikflüssigkeit auf einem vergleichsweise kurzen Weg im Verdrängerzylinder 14' aufgenommen werden. Auf diese Weise wird der Verstellweg für die Anschlagbegrenzung des Verdrängerkolbens 15' auf eine Strecke von beispielsweise ca. 1,5 mm reduziert, die etwa mit einer Umdrehung einer Schraube od.dgl. erreicht werden kann. Damit kann für ständig variierbare Einstellungen an der Schraube, der Spindel od.dgl. Einstellelement des Nebenraumes eine Skala angebracht werden.

Dadurch, daß das in den Nebenraum des Verdrängerzylinders 14 bzw. 14' verdrängte Druckmittel gegen einen Widerstand in diesen Nebenraum einströmt, ergibt sich der große Vorteil, daß die Einspannung eines Werkstückes 21 kraft- und wegabhängig erfolgt. Ein Druckaufbau im Kolbenstangenraum, der eine Verminderung der Spannkraft bewirkt, erfolgt dabei nur dann, wenn sich das Werkstück 21 elastisch oder plastisch verformt und somit Hydraulikflüssigkeit aus dem Kolbenstangenraum erst in den Verdrängerraum fließen kann und der Verdrängerkolben gegen den Anschlag fährt. Nach Erreichen des Anschlages baut sich der Gegendruck dann schlagartig auf. Daraus folgt, daß es kein Nachdrücken des Spannzylinders nach dem Durchsägen eines Profiles gibt. Es ist vielmehr eine konstante Aus- und Einfahrgeschwindigkeit des Spannzylinders unabhängig von irgend einer Einstellung gegeben und es gibt keinen Spannkraftverlust bei Einsatz der hydraulischen Verdrängerkolbenrückstellung, da eine Federvorspannkraft entfällt.


**Patentansprüche**

1.  Verfahren zum zeitweiligen Festlegen von Werkstücken, insbesondere von Hohlprofilen bei Werkzeugmaschinen mit Hilfe einer Spannvorrichtung, deren Spannelement durch den Kolben und die Kolbenstange eines hydraulischen Arbeitszylinders in Vorschub- und Rückstellrichtung bewegt wird, wobei beim Vorschub des Spannelementes Hydrauliköl auf der die Kolbenstange aufweisenden Seite verdrängt wird und abfließt, **dadurch gekennzeichnet**, daß beim Auftreffen des Spannelementes auf das Werkstück der Hauptabfluß des beim Vorschub verdrängten Hydrauliköls gesperrt und eine Teilmenge des auf der die Kolbenstange aufweisenden Seite verbliebenen Hydrauliköls über einen Nebenabfluß gegen einen Widerstand verdrängt wird, bis durch den sich dabei aufbauenden Gegendruck die Vorschubbewegung des Spannelementes gestoppt wird.

2.  Verfahren nach Anspruch 1, dadurch gekennzeichnet, daß die nach dem Auftreffen des Spannelementes auf das Werkstück noch verdrängte Teilmenge des Hydrauliköls entsprechend der jeweiligen Elastizität oder Nachgiebigkeit der einzuspannenden Werkstücke verändert wird.

3.  Spannvorrichtung, insbesondere zur Durchführung des Verfahrens nach Anspruch 1 oder 2, mit einem Spannelement , welches von dem Kolben und der Kolbenstange eines hydraulischen Arbeitszylinders bewegbar ist, wobei beim Vorschub des Spannelementes und Einströmen des Druckmittels auf die der Kolbenstange abgewandten Seite und bei dessen axialer Verstellung Hydrauliköl auf der die Kolbenstange aufweisenden Seite verdrängt wird, dadurch gekennzeichnet, daß der Kolben (2) als relativ zur Kolbenstange (3) um einen begrenzten Weg verstellbarer Schiebekolben ausgebildet ist, daß an der Kolbenstange (3) zumindest eine Rückführöffnung (4) für das beim Vorschub zu verdrängende Hydrauliköl vorgesehen ist und der Schiebekolben (2) bei einer Relativverstellung in axialer Richtung diese Rückführöffnung (4) verschließt, und daß der auf der Seite der Kolbenstange (3) befindliche Zylinderraum einen mit ihm verbundenen Nebenraum hat oder damit verbunden ist.

4.  Spannvorrichtung nach Anspruch 3, dadurch gekennzeichnet, daß der mit dem Zylinderraum verbundene Nebenraum bezüglich seines Volumens veränderbar ist.

5.  Spannvorrichtung nach Anspruch 3 oder 4, dadurch gekennzeichnet, daß der Nebenraum einen von einer Rückstellkraft beaufschlagten oder beaufschlagbaren Kolben (15, 15') enthält und die Rückstellkraft vorzugsweise eine Feder, insbesondere Druckfeder (17), oder ein Kolben (15') ist.

6.  Spannvorrichtung nach einem der Ansprüche 3 bis 5, dadurch gekennzeichnet, daß der Verschiebeweg des in dem Nebenraum befindlichen Kolbens (15, 15') durch einen in Verschieberichtung des Kolbens verstellbaren und festlegbaren Anschlag (18,18′) begrenzt ist.

7. Spannvorrichtung nach einem der Ansprüche 3 bis 6, dadurch gekennzeichnet, daß der verstellbare Anschlag (18, 18′) als in Richtung des Kolbenweges orientierte Schraube oder Spindel ausgebildet ist.

8. Spannvorrichtung nach einem der Ansprüche 3 bis 7, dadurch gekennzeichnet, daß die zum Rückstellen des im Nebenraum befindlichen Kolbens dienende Feder in ihrer Lage in Verschieberichtung des Kolbens veränderbar ist und sich dazu vorzugsweise auf einer in Verschieberichtung des Kolbens verstellbaren und festlegbaren Gegenplatte abstützt.

9. Spannvorrichtung nach einem der Ansprüche 3 bis 8, dadurch gekennzeichnet, daß die Gegenplatte über ein Spindel, eine Schraube od.dgl. Verstellelement verstellbar ist.

10. Spannvorrichtung nach einem der Ansprüche 3 bis 9, dadurch gekennzeichnet, daß ein Teilstrom der beim Vorschub des Spannelementes durch die Rückflußöffnung (4) verdrängten Hydrauliköls zum Rückstellen des im Nebenraum befindlichen Kolbens (15′) dient.

11. Spannvorrichtung nach einem der Ansprüche 3 bis 10, dadurch gekennzeichnet, daß die lichten inneren Durchmesser des Arbeitszylinders (1) und des als Verdrängerzylinder (14,14′) ausgebildeten Nebenraumes etwa gleich groß sind.

## Claims

1. A method of temporarily clamping workpieces, particularly hollow sections, in machine tools with the aid of a clamping device, the clamping element thereof being moved in the direction of feed and return by the piston and piston rod of a hydraulic working cylinder, hydraulic oil on the side presenting the piston rod being displace and flowing off during feed of the clamping element, **characterized in that** when the clamping element encounters the workpiece the main discharge of the hydraulic oil displaced during the feed is blocked and a part of the hydraulic oil left on the side presenting the piston rod is displaced via a secondary discharge against a resistance, until the feed movement of the clamping element is stopped by the counter-pressure building up.

2. A method as claimed in claim 1, characterized in that the part of the hydraulic oil still displaced after the clamping element has encountered the workpiece is altered according to the respective elasticity or yieldingness of the workpieces to be clamped.

3. A clamping device, particularly for performing the method as claimed in claim 1 or claim 2, having a clamping element movable by the piston and piston rod of a hydraulic working cylinder, hydraulic oil on the side presenting the piston rod being displaced as the clamping element is fed and as the pressure medium flows in on the side averted from the piston rod and as the piston is axially adjusted, **characterized in that** the piston (2) takes the form of a sliding piston adjustable a limited distance relative to the piston rod (3), that on the piston rod (3) at least one return opening (4) is provided for the hydraulic oil to be displaced during feed and in one relative position in the axial direction the sliding piston (2) closes said return opening (4) and that the cylinder area situated on the side of the piston rod (3) has an ancillary chamber connected thereto or is connected therewith.

4. A clamping device as claimed in claim 3, characterized in that the ancillary chamber connected to the cylinder chamber is variable with respect to the volume thereof.

5. A clamping device as claimed in claim 3 or claim 4, characterized in that the ancillary chamber contains a piston (15, 15′) acted upon or adapted to be acted upon by a restoring force and the restoring force is preferably a spring, particularly a compression spring (17), or a piston (15′).

6. A clamping device as claimed in any one of claims 3 to 5, characterized in that the path of movement of the piston (15, 15′) situated in the ancillary chamber is limited by a stop (18, 18′) adjustable and fixable in the direction of movement of the piston.

7. A clamping device as claimed in any one of claims 3 to 6, characterized in that the adjustable stop (18, 18′) takes the form of a screw or spindle oriented in the direction of the piston travel.

8. A clamping device as claimed in any one of claims 3 to 7, characterized in that the spring serving for restoring the piston situated in the ancillary chamber is variable in its position in the direction of movement of the piston and for this purpose is preferably supported on a counter-plate adjustable and fixable in the direction of movement of the piston.

9. A clamping device as claimed in any one of claims 3 to 8, characterized in that the counter-plate is adjustable by way of a spindle, a screw or like adjusting element.

10. A clamping device as claimed in any one of claims 3 to 9, characterized in that a partial flow of the hydraulic oil displaced through the return opening (4) during feed of the clamping element serves for restoring the piston (15′) situated in the ancillary chamber.

11. A clamping device as claimed in any one of claims 3 to 10, characterized in that the inside diameters of the working cylinder (1) and of the ancillary chamber in the form of a displacement cylinder (14, 14′) are of about equal size.

**Revendications**

1. Procédé permettant l'immobilisation temporaire de pièces à usiner, notamment de profilés creux, sur des machines-outils, à l'aide d'un dispositif de serrage dont l'élément de serrage est déplacé dans le sens de l'avance et du recul par le piston et la tige de piston d'un vérin de travail hydraulique, de l'huile hydraulique étant chassée et s'échappant, lors de l'avance de l'élément de serrage, du côté comportant la tige de piston, caractérisé en ce que l'échappement principal de l'huile hydraulique chassée au cours du mouvement d'avance est bloqué lorsque l'élément de serrage arrive sur la pièce à usiner, et qu'une quantité partielle de l'huile hydraulique restée du côté contenant la tige de piston est chassée à travers un échappement auxiliaire, contre une résistance, jusqu'à ce que le mouvement d'avance de l'élément de serrage soit stoppé par la contre-pression ainsi créée.

2. Procédé selon la revendication 1, caractérisé en ce que la quantité partielle d'huile hydraulique chassée après l'arrivée de l'élément de serrage sur la pièce à usiner est ajustée en fonction de l'élasticité ou de la résistance des pièces à serrer.

3. Dispositif de serrage, notamment dispositif permettant l'exécution du procédé selon la revendication 1 ou 2, comprenant un élément de serrage pouvant être déplacé par l'intermédiaire du piston et de la tige de piston d'un vérin hydraulique de travail, de l'huile hydraulique étant chassée du côté comportant la tige de piston lors de l'avance de l'élément de serrage et lors de l'admission du fluide de pression du côté opposé à la tige de piston et .lors du déplacement axial de l'élément de serrage, caractérisé en ce que le piston (2) est réalisé sous forme d'un piston coulissant pouvant être déplacé sur une course limitée, relativement à la tige (3) de piston, en ce qu'au moins un orifice (4) de retour pour l'huile hydraulique chassée pendant le mouvement d'avance est prévu dans la tige (3) de piston, et en ce que le piston coulissant (2) obture cet orifice (4) de retour lors d'un déplacement relatif dans le sens axial de celui-ci, et en ce que la chambre cylindrique située du côté de la tige (3) de piston comporte ou est reliée à une chambre auxiliaire avec laquelle elle communique.

4. Dispositif de serrage selon la revendication 3, caractérisé en ce que la chambre auxiliaire reliée à la chambre cylindrique présente un volume variable.

5. Dispositif de serrage selon la revendication 3 ou 4, caractérisé en ce que la chambre auxiliaire comporte un piston (15, 15′) soumis ou pouvant être soumis à une force de rappel, et en ce que la force de rappel est fournie de préférence par un ressort, notamment par un ressort (17) de pression, ou par un piston (15′).

6. Dispositif de serrage selon l'une des revendications 3 à 5, caractérisé en ce que la course de coulissement du piston (15, 15′) situé dans la chambre auxiliaire est limitée par une butée (18, 18′) qui peut être déplacée et verrouillée dans le sens du coulissement du piston.

7. Dispositif de serrage selon l'une des revendications 3 à 6, caractérisé en ce que la butée réglable (18, 18') est réalisée sous forme d'une vis ou broche orientée dans le sens du déplacement du piston.

8. Dispositif de serrage selon l'une des revendications 3 à 7, caractérisé en ce que la position du ressort servant à assurer le rappel du piston situé dans la chambre auxiliaire est réglable dans le sens du coulissement du piston, et qu'à cette fin, le ressort s'appuie de préférence sur une contre-plaque réglable, pouvant être verrouillée, dans le sens du coulissement du piston.

9. Dispositif de serrage selon l'une des revendications 3 à 8, caractérisé en ce que la contre-plaque est réglable par l'intermédiaire d'une broche, d'une vis ou d'un élément similaire de réglage.

10. Dispositif de serrage selon l'une des revendications 3 à 9, charactérisé en ce qu'un courant partiel de l'huile hydraulique chassée à travers l'orifice (4) de retour, lors de l'avance de l'élément de serrage, sert à assurer le rappel du piston (15') situé dans la chambre auxiliaire.

11. Dispositif de serrage selon l'une des revendications 3 à 10, caractérisé en ce que les diamètres intérieurs du vérin (1) de travail et de la chambre auxiliaire réalisée sous forme d'un cylindre volumétrique (14, 14') sont à peu près identiques.

Fig. 1

Fig. 2

Fig. 3

Fig. 4

Fig. 5

Fig. 6

Fig. 7

Fig. 8

Fig. 9

Fig. 10

EP 0 380 739 B1

Fig. 11